# EUROPEAN PATENT APPLICATION

(11) **EP 1 260 934 A2**
(43) Date of publication of application: **27.11.2002**
(21) Application number: 02010288.5
(22) Date of filing: 21.05.2002
(51) Int. Cl.: G06K 9/00, G06T 9/00, G06F 17/30

(54) **Surveillance recording device and method**

(30) Priority: 22.05.2001 JP 2001151827
(71) Applicant: MATSUSHITA ELECTRIC INDUSTRIAL CO., LTD., Kadoma-shi, Osaka 571-8501 (JP)
(72) Inventor: Yuji, Takata, Yokohama (JP); Shogo, Hamasaki, Kasuya-gun, Fukuokaken (JP); Hideaki, Matsuo, Fukuokashi, Fukuokaken (JP); Kazuyuki, Imagawa, Fukuokashi, Fukuokaken (JP); Masafumi, Yoshizawa, Shikushinoshi, Fukuokaken (JP)
(74) Representative: Balsters, Robert

(57) **Abstract**

A surveillance recording device using cameras(1)(2). Facial images and whole body images of a person are extracted from images shot by cameras(1)(2), a height is calculated from the whole body images, and retrieval information including a facial image (best shot) is associated with images in a recording medium(90) and recorded into a database(17), and utilized as an index for retrieval within the recording medium(90) later. Facial images are displayed in a list of thumbnails to make it easy to retrieve a target person on a thumbnail screen. The images are displayed together with a moving image of a target person.

## Description

The present invention relates to a surveillance recording device and method for surveilling comings and goings of people with a camera.

In facilities having objects to be protected, for example, in a bank, a surveillance camera is set up to surveille comings and goings of people. As one such conventional surveillance recording device which can record images over a long period of time, a time lapse video exists. A time lapse video is a device for compressing images obtained from a camera and storing the images onto a VHS video tape over a long period of time.

In this device, in order to reduce the amount of data to be recorded, images inputted from a camera are recorded at fixed frame intervals while being skipped, and this lowers the image quality. Therefore, recording onto a videotape for a relatively long period of time is possible although the tape length is the same.

Furthermore, a method in which images are compressed and recorded over a long period of time by using an image compression technique such as an MPEG exists.

However, in a time lapse video, it becomes difficult to view recorded images since the level of image quality is lowered, and there is a possibility that an entering person's identity cannot be distinguished. Furthermore, skipping recording is carried out, so that if a key scene occurs during the skipped period, the scene including the person who has entered may not be recorded at all.

In addition to the abovementioned problems, the conventional surveillance recorder simply captures camera images. Therefore, after finishing recording, it is very difficult for an operator to search a target scene or person from long and massive image records.

For example, when a number of visitors successively enter, in order to search a target person from long and massive image records, an operator searches for him/her while viewing all recorded images, and this work is troublesome.

Therefore, an object of the invention is to provide a surveillance recording device and related techniques by which it becomes possible for an operator to easily search a target person.

A surveillance recording device according to a first aspect of the invention comprises cameras for shooting a target space, an image recording and reproducing unit for recording images shot by the cameras onto a recording medium and reproducing images from the recording medium, an essential image extracting unit for extracting essential images of a person from images shot by the cameras, and a retrieval information recording unit for recording retrieval information including the essential images.

By this construction, an operator can easily search for a target image by utilizing retrieval information.

In a surveillance recording device according to a second aspect of the invention, facial images of people are included in the essential images.

By this construction, the operator can easily intuitively carry out retrieval while referring to facial images of people.

In a surveillance recording device according to a third aspect of the invention, whole body images of people are included in the essential images.

By this construction, an operator can easily carry out retrieval based on physical characteristics or clothing while referring to the whole body images of people.

A surveillance recording device according to a fourth aspect of the invention comprises a person characteristics detecting unit for detecting the person characteristics based on the essential images extracted by the essential image extracting unit, and the retrieval information includes the person characteristics.

By this construction, an operator can easily carry out retrieval based on person characteristics of people.

In a surveillance recording device according to a fifth aspect of the invention, person characteristics include the heights of people.

By this construction, an operator can easily carry out retrieval based on the height of a person.

A surveillance recording device according to a sixth aspect of the invention comprises a best shot selecting unit for selecting a best shot among facial images of people, and the retrieval information includes the best shot facial image.

By this construction, retrieval can be carried out by using clear facial images.

A surveillance recording device according to a seventh aspect of the invention comprises a display unit and a display image generating unit for generating images to be displayed on the display unit, wherein the display image generating unit generates a thumbnail screen for displaying a list of essential images of people.

By this construction, an operator can easily narrow down a target person on the thumbnail screen.

In a surveillance recording device according to an eighth aspect of the invention, the display image generating unit generates a detailed information screen relating to a specific thumbnail specified on the thumbnail screen, and this detailed information screen includes essential images of a person, the person characteristics, and the person shooting time.

By this construction, an operator can narrow down a target person on the facial image thumbnail screen and review detailed information relating to the person, whereby the operator can efficiently carry out retrieval.

In a surveillance recording device according to a ninth aspect of the invention, the image recording and reproducing unit records images in only sections in which the essential image extracting unit has been able to extract essential images into a recording medium.

By this construction, useless images including no person but backgrounds are not recorded, so that a recording medium can be efficiently used.

A surveillance recording device according to a tenth aspect of the invention comprises at least cameras for stereoscopically shooting a target space, an image recording and reproducing unit for recording images shot by the cameras into a recording medium and reproducing images from this recording medium, a detection wall setting unit for setting a detection wall for detection of entry of people into the target space, and a collision detecting unit for detecting whether or not people collides with the detection wall, wherein the detection wall is a virtual wall composed of a plurality of voxels depending on the positional relationship with the cameras, and the thickness of this detection wall is set to be sufficiently small with respect to the depth of the target space.

By this construction, only important sections are surveilled, and the calculation amount is reduced, whereby an increase in speed and a saving of system resources can be achieved at the same time. Furthermore, entry of people can be detected by only the cameras that have been installed in the surveillance recording device in advance, so that additional equipment such as a special sensor is not necessary.

In a surveillance recording device according to an eleventh aspect of the invention, the essential image extracting unit extracts essential images of a person after the collision detecting unit detects collision of a person, and the retrieval information includes the time at which the collision detecting means detects collision of the person.

By this construction, useless extraction process until the person collides with the detection wall is eliminated, an operator can easily retrieve images, using the time of detection as a key.

In a surveillance recording device according to a twelfth aspect of the invention, the image recording and reproducing unit starts recording images shot by the cameras after the collision detecting unit detects collision of a person.

By this construction, useless image recording until a person collides with the detection wall is eliminated, the capacity of a recording medium can be efficiently used, and the time for seeking within the recording medium during retrieval can be reduced.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a block diagram of a surveillance recording device according to an embodiment of the invention;
Fig. 2 is an explanatory view of a detection wall of the same;
Fig. 3(a) is an illustration of an image shot by cameras of the same, Fig. 3(b) is an illustration of the facial image of the same, and Fig. 3(c) is an illustration of the whole body image of the same;
Fig. 4 is an illustration of a template for facial direction judgment;
Fig. 5 is a flowchart of the same surveillance recording device;
Fig. 6 is a status transition drawing of a display screen of the same; and
Fig. 7(a) is an illustration of a retrieval screen of the same, Fig. 7(b) is an illustration of a thumbnail screen of the same, and Fig. 7(c) is an illustration of a detailed information screen of the same.

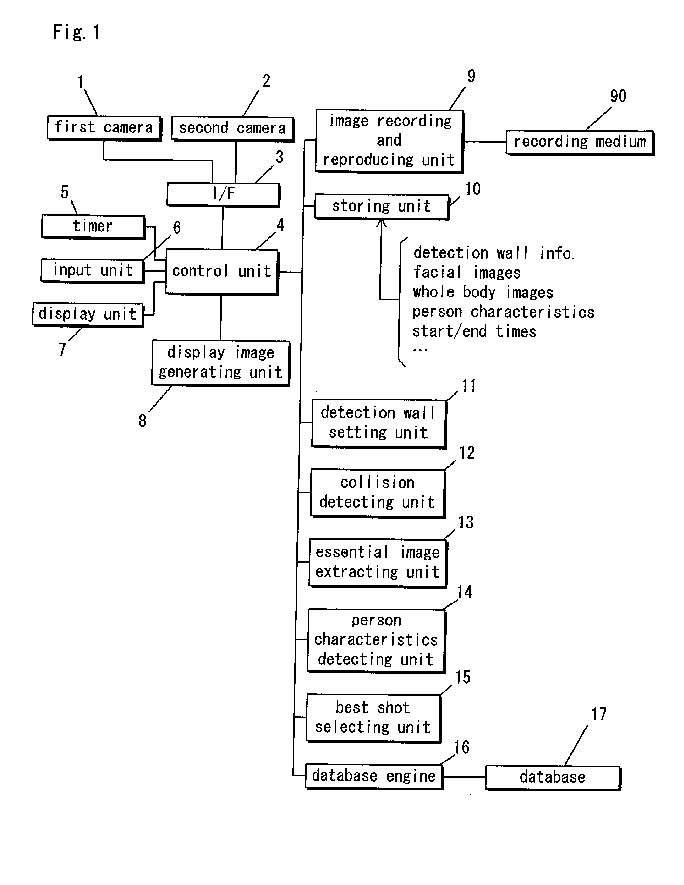

Hereinafter, an embodiment of the invention is described in detail with reference to the accompanying drawings. Fig. 1 is a block diagram of a surveillance recording device according to an embodiment of the invention.

As shown in Fig. 1, this device comprises two cameras, that is, a first camera 1 and a second camera 2. Herein, in the present embodiment, if stereo vision is possible by the cameras, the number of cameras may be three or more, or only one stereo camera may be used. As these cameras 1 and 2, cameras whose installation positions and parameters have been generally known are used. The positional relationship of the cameras 1 and 2 is described in detail later.

A control unit 4 controls the respective components shown in Fig. 1, and camera images shot by the first camera 1 and second camera 2 are inputted into the control unit 4 via an interface 3.

A timer 5 supplies information including the current date and time to the control unit 4. An input unit 6 comprises a keyboard and a mouse, and is used by an operator to input information such as detection wall information described later, recording start/end information, and retrieval information into the device.

A display unit 7 is formed of an LCD or CRT, which displays images required by an operator. The images to be displayed on the display unit 7 are generated by a display image generating unit 8 in procedures described later.

An image recording and reproducing unit 9 reads and writes into a recording medium 90, and stores and reproduces moving images. Typically, the recording medium 90 is a large capacity digital recording and reproducing medium such as a DVD or DVC, and the image recording and reproducing unit 9 is a player for driving this medium. Considering the operation time such as index search or fast-forwarding in reproduction of a recording medium, use of such a large capacity digital image recording and reproducing medium is advantageous, however, if the operation time is not regarded as important, an analog medium such as a VHS may be used. The recording format is optional, however, a format such as the MPEG in which images are compressed is desirable for recording over a long period of time without a lowering in the apparent image quality.

A storing unit 10 is a memory or a hard disk, which is read and written by the control unit 4, and stores information including detection wall information, facial images, whole body images, person characteristics, and start/end times.

A detection wall setting unit 11 sets a detection wall described later. A collision detecting unit detects whether or not a person collides with the detection wall.

An essential image extracting unit 13 extracts essential images showing person characteristics from images shot by the cameras 1 and 2. In this embodiment, essential images are facial images and whole body images.

A person characteristics detecting unit 14 detects person characteristics. In this embodiment, the heights of people are calculated based on the whole body images and are used as person characteristics. The weights of people may be estimated from the heights. Such characteristics may include gender, age bracket, body type, skin or hair color, and eye color.

A best shot selecting unit 15 selects best shots that most clearly show person characteristics among essential images extracted by the essential image extracting unit 13. In this embodiment, in a case where there are several facial images, the best shot selecting unit 15 chooses an image showing a full face, and determines this image as a best shot. As such a best shot, a facial image may be optionally selected if facial characteristics can be easily recognized in the image.

In information stored in the storing unit 10, information such as facial images (best shots), whole body images, person characteristics, and start/end time that can be utilized as indexes for retrieval of moving images within the storing unit 10 later is recorded in a database 17 as moving image retrieval information. A database engine 16 retrieves the database 17 or registers information into the database 17 under control of the control unit 4.

Herein, in the present embodiment, the database 17 corresponds to the "retrieval information recording means" in claims hereof. Moving image retrieval information may be directly recorded into a recording medium 90 without especially providing databases or database engines if the format of the recording medium 90 allows for such.

In this case, the "recording medium" and "retrieval information recording means" in claims hereof are integrated, and this construction is also included in the present invention.

As above, two constructions, that is, a construction in which a "recording medium" and a "retrieval information recording means" in claims hereof are integrated together and a construction in which a "recording medium" and "retrieval information recording means" in claims hereof are separated from each other are described. Whichever construction is employed, typically, by using the format of MPEG7, retrieval information, moving images and still images shot by the cameras 1 and 2 or other necessary data (hereinafter, referred to as "quoting data") may be quoted in metadata (the format may be binary or ASCII).

In this case, metadata and quoting data may be in the same recording medium or not. For example, quoting data may be quoted via a network from a recording medium including existence of metadata.

Herein, by using the format of MPEG7, in metadata, descriptors are used to categorize quoting data, and while classifying retrieval information, pieces of data having a mutual relationship can be collectively and smartly quoted. This construction is also included in the present invention.

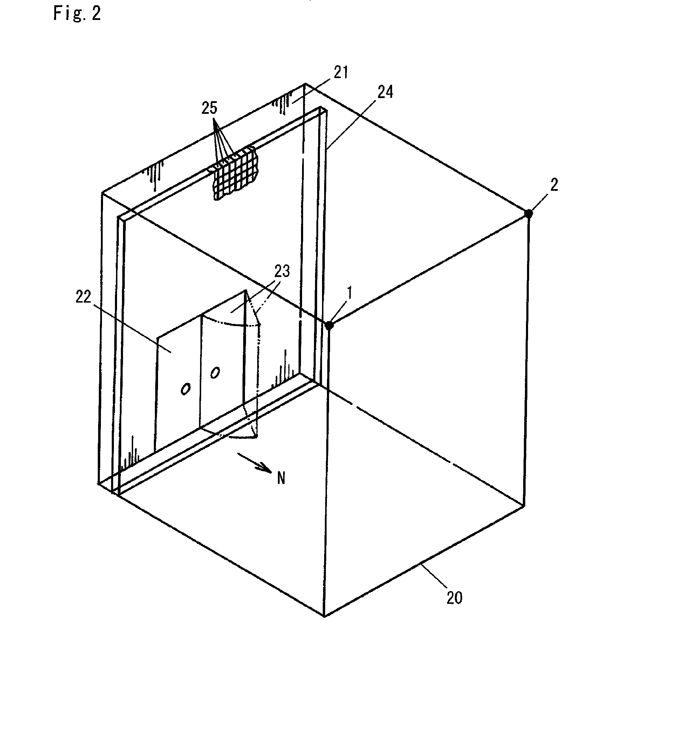

Next, the detection wall in the present embodiment is described with reference to Fig. 2. An entry is provided in one wall surface 21 of a target space 20, and this entry is provided with doors 22 and 23 in a manner enabling them to open and close. The surveillance recording device of this embodiment surveilles movements of people and objects entering the inside of the target space 20 (toward the arrow N).

Therefore, the first camera 1 and second camera 2 are installed toward the wall surface 21 side, and the positional relationship and parameters of the cameras are generally known.

In this construction, in the present embodiment, a detection wall 24 is provided slightly ahead from the doors 22 and 23. This detection wall 24 is a virtual thin wall, and formed in parallel with the wall surface 21 in this example, The inside of the detection wall 24 is filled with a number of voxels 25. Preferably, the detection wall 24 is formed to be as thin as possible in order to reduce the amount of detection processing. For example, as shown in the figure, the thickness is set to be equivalent to that of one voxel. The thickness of the detection wall 24 may be set to be equivalent to that of two or more voxels, however, at least, the thickness is set to be sufficiently small with respect to the depth of the target space 20 (the length in the arrow N direction).

As mentioned above, in the present embodiment, two cameras 1 and 2 are set so as to have points of view that are different from each other, and these cameras 1 and 2 shoot the wall surface 21 side from different directions.

Herein, when a person enters the inside of the target space 20 from the entry in the wall surface 21, a silhouette of the person is shot on the image planes of the respective cameras 1 and 2. Then, when the person advances inside the target space 20 and collides with the detection wall 24, this collision can be detected by the following procedures. The detection wall 24 is a virtual wall. Therefore, even when the person collides with the detection wall, he/she is not obstructed from advancing at all, does not recognize the collision, and can pass through the detection wall 24.

Herein, it can be judged whether or not the voxels composing the detection wall 24 overlap the person by the following principle.

Voxels that do not overlap the person are outside the person image in the camera image of at least one of the cameras 1 and 2. Voxels that overlap the person are inside the person images in camera images of all cameras.

In other words, if a certain voxel is within person images in camera images of all cameras, this means that the voxel overlaps the person. On the contrary, if a voxel is outside a person image in a camera image of either one of the cameras, this means that the voxel does not overlap the person.

Therefore, among the voxels 25 composing the detection wall 24, if the number of voxels that are within person images in images of all cameras 1 and 2 is one or more, the collision detecting unit 12 judges that the person has collided with the detection wall 24.

On the contrary, among the voxels 25 composing the detection wall 24, if there is no voxel that is within person images in images of all cameras 1 and 2, it is judged that the person has not collided with the detection wall 24.

Thus, by means of the thin detection wall 24 composed of voxels, the fact that a person has entered the target space 20 can be detected. Furthermore, as mentioned above, by forming the detection wall 24 as thin as possible, the number of voxels to be examined by the collision detecting unit 12 can be reduced, and as a result, the operation amount can be reduced and high-speed processing can be realized, and the burden on system resources can also be reduced.

Moreover, entry of a person can be detected by only cameras for shooting surveillance images (installed in advance), and provision of other components, for example, an infrared-ray sensor for sensing passage of people in addition to the cameras is not necessary.

Although Fig. 2 shows a flat plane detection wall 24, however, the detection wall 24 may be formed into an optional shape only if the wall is composed of voxels. The detection wall can be freely changed into, for example, a curved shape, a shape with a bent portion, steps, or a shape enclosed by two or more surfaces in accordance with a target to be captured by surveillance.

Incidentally, enclosure of a target to be captured by such a free encircling net is very difficult when using the abovementioned infrared ray sensor.

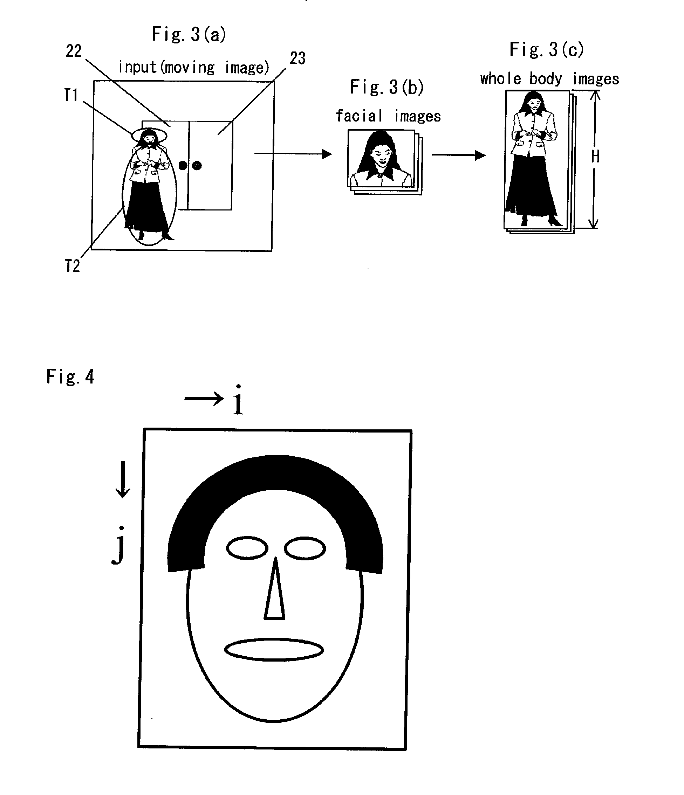

Next, referring to Fig. 3, the essential image extracting unit 13 is explained in detail. As mentioned above, in the present embodiment, the essential image extracting unit 13 extracts essential images (facial images and whole body images) showing person characteristics among images shot by the cameras 1 and 2.

A shot image is, for example, as shown in Fig. 3(a). In Fig. 3(a), doors 22 and 23 are taken in the background, and in front of the doors, an image of a woman is taken at the left position of the image.

Herein, in the present embodiment, the essential image extracting unit 13 uses two templates, that is, as shown in Fig. 3(a), a first template T1 (for face detection) of a small ellipse that is long horizontally, and a second template T2 (for detection of portions other than the face) of a large ellipse that is long vertically. Then, the essential image extracting unit 13 carries template matching in the usual manner to calculate correlation between the shot image and these templates T1 and T2, and calculates the point with maximum correlation in the shot image.

As a result, as shown in Fig. 3(a), when sufficient matching is obtained (comparison with threshold values may be properly made), as shown in Fig. 3(b), the essential image extracting unit 13 extracts images in the vicinity of the template T1 as facial images. Furthermore, as shown in Fig. 3(c), images in the vicinity of both templates T1 and T2 are extracted as whole body images.

As essential images, only facial images are sufficient in practical use. The method for extracting faces from the shot image is not limited to the abovementioned method. Other than this, for example, a method involving detection of face parts and a method involving extraction of skin-color regions can be optionally selected.

As shown in Fig. 3(c), the person characteristics detecting unit 14 determines the height H of the whole body images extracted by the essential image extracting unit 13 as the height of a shot person as shown in Fig. 3(c). This height H can be easily determined from the number of pixels of the whole body images since the geometric positions of the cameras 1 and 2 are known.

Next, best shot selection by the best shot selecting unit 15 is explained with reference to Fig. 4.

As mentioned above, in the present embodiment, when there are several facial images, the best shot selecting unit 15 chooses a full facial image and determines it as a best shot. This is because person face characteristics become most clear when the person turns his/her face frontward.

As described later, from a collision of a person with the detection wall 24 till the end of shoot of the person, a certain period of time elapses normally. Therefore, during the period, images of several frames are shot and it is possible that several facial images of the person are obtained. The best shot selecting unit 15 selects an image in which the person is most clearly shot among these images.

In the present embodiment, judgment of face direction is made. Concretely, the best shot selecting unit 15 has a template of a standard full face as shown in Fig. 4, and carries out matching between the facial images extracted by the essential image extracting unit 13 and this template. Then, a facial image that is best matched with the template is regarded as a best shot.

As another judgment of face direction, it is also allowed that the best shot selecting unit 15 determines an image with a maximum number of pixels within the skin color regions in a color space as a best shot.

Or, in place of the face direction judgment, a best shot can be determined by judging the timing. Herein, since the speed of walking of a person can be ordinarily known, the time until the person is most clearly shot by the cameras 1 and 2 after a person collides with the detection wall 24 can be roughly estimated. Therefore, the best shot selecting unit 15 may determine a best shot based on this time.

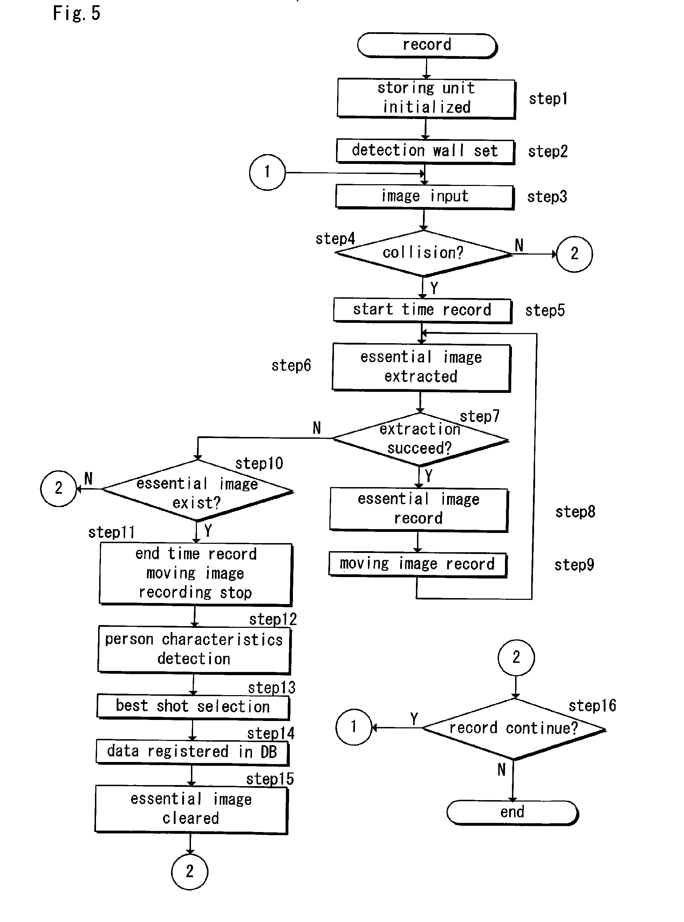

Next, the shooting and recording flow by the surveillance recording device according to the present embodiment is explained with reference to Fig. 5.

First, in step 1, the control unit 4 clears the storing unit 10, and the detection wall setting unit 11 sets the detection wall 24 (step 2). Herein, the control unit 4 requires an operator to input detection wall information from the input unit 6, or if the information has already been known, the information may be loaded from an external storing unit.

Next, in step 3, the control unit 4 starts inputting images from the first camera 1 and second camera 2. Then, the control unit 4 directs the collision detecting unit 12 to detect whether or not a person has collided with the detection wall 24, and the collision detecting unit 12 feeds back detection results to the control unit 4.

If collision is not detected, the control unit 4 advances the process to step 16, and confirms that there are no instructions to end recording inputted from the input unit 6, and then returns the process to step 3.

When collision is detected, in step 5, the control unit 4 obtains current date information from the timer 5, and stores this date information as a start time into the storing unit 10.

Next, in step 6, the control unit 4 transmits a shot image to the essential image extracting unit 13 and commands the unit to extract essential images. Receiving this command, the essential image extracting unit 13 attempts to extract facial images and whole body images from the shot image.

At this point, when extraction is successfully carried out (step 7), the essential image extracting unit 13 adds facial images and whole body images into the storing unit 10 (step 8), and notifies the control unit 4 of successful completion of extraction. Receiving this notification, the control unit 4 instructs the image recording and reproducing unit 9 to record the shot image as moving images. As a result, moving images are stored in the recording medium 90.

On the other hand, in step 7, when the extraction is failed (for example, when a person has come out from the fields of view of the cameras), the control unit 4 checks whether or not the essential images have been stored in the storing unit 10 in step 10.

When these have been stored, the control unit 4 judges that shooting of a person has been completed, and executes the next processing. First, in step 11, current date information is obtained from the timer 5, and stores this date information into the storing unit 10 as an end time.

In step 12, the control unit 4 transmits the whole body images in the storing unit 10 to the person characteristics detecting unit 14, directs the unit to calculate height as a person characteristic, and stores the calculation result into the storing unit 10. Furthermore, in step 13, the control unit 4 directs the best shot selecting unit 15 to select a best shot and obtains a selection result.

When the abovementioned processing is ended, the control unit 4 registers useful information including a best shot facial image, whole body image, start time, end time, and person characteristics (moving image retrieval information) for retrieval of moving images in the database 17 by using the database engine 16 in step 14.

After completing registration, in step 15, the control unit 4 clears the moving image retrieval information in information stored in the storing unit 10, advances the process to step 16, and prepares for the next processing.

In step 10, when there is no essential image in the storing unit 10, the control unit 4 judges that not a person but some object has collided with the detection wall 24 and advances the process to step 16, and prepares for the next processing.

In the processes mentioned above, the order of steps 11 through 13 may be freely changed.

By this construction, it can be understood that moving images in only a period in which a person is shot by the cameras after collision the detection wall is detected are recorded in the storing unit 10. That is, useless recording in a period in which no person is shot by the cameras is omitted, so that efficient operation is possible. In addition, moving image retrieval information is stored in the database 17, and by using this information as an index, only important scenes can be easily retrieved and reproduced.

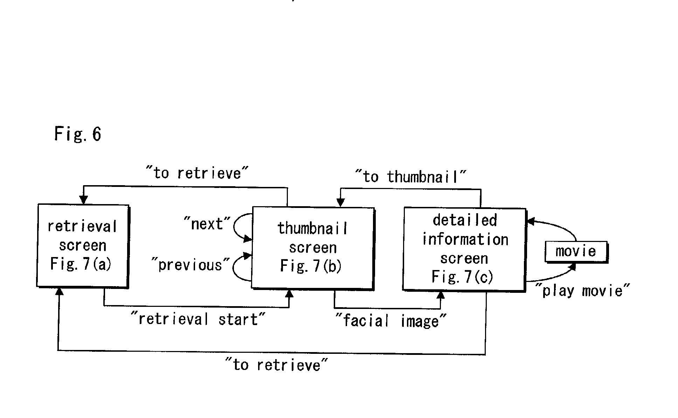

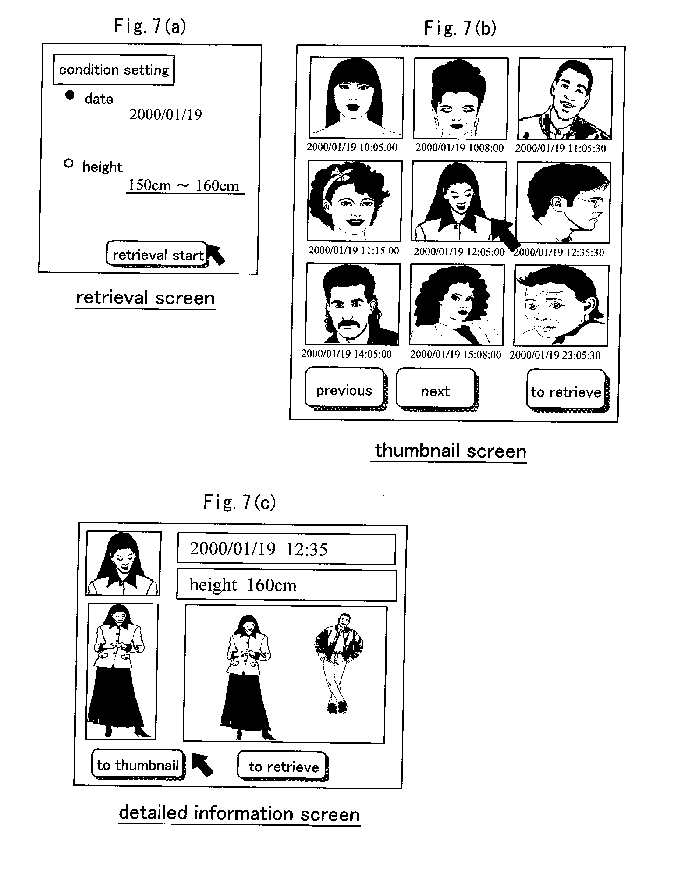

Next, the retrieval flow of surveillance results is explained with reference to Fig. 6 and Fig. 7. First, as shown in Fig. 6, in this retrieval, the display image generating unit 8 generates three types of screens, that is, a retrieval screen (Fig. 7(a)), thumbnail screen (Fig. 7(b)), and detailed information screen (Fig. 7(c)) in accordance with the circumstances, and displays them on the display unit 7.

These screens are changed from each other when an operator clicks each button by using the input unit 6 as shown in Fig. 6.

First, in the retrieval screen shown in Fig. 7(a), the abovementioned moving image retrieval information (registered in the database 17) is inputted. In the example shown in the figure, a date and height are inputted, however, this is just one example, and the input information may be properly changed.

Then, when the moving image retrieval information is inputted and the retrieval start button is clicked, the control unit 4 directs the database engine 16 to retrieve a corresponding piece of moving image retrieval information, and the retrieval results are transmitted to the display image generating unit 8.

Then, the display image generating unit 8 prepares thumbnails from corresponding facial images (best shots) and displays a list of thumbnails as shown in Fig. 7(b).

Furthermore, in a case where there are many person candidates and it is not possible to display all thumbnails at the same time, a next screen button and a previous screen button are displayed on the screen. Then, when the button is clicked, the remaining thumbnail images are listed and displayed.

An operator checks this list and searches data to be examined based on facial images and clicks the thumbnail which he/she wants to check.

Then, the control unit 4 informs the display image generating unit 8 of the desired thumbnail based on the information inputted through the input unit 6. Receiving this information, the display image generating unit 8 displays a detailed information screen as shown in Fig. 7(c). In this example, at this point, from moving image retrieval information corresponding to the desired thumbnail, a facial image (best shot), whole body image, start time, and person characteristics (height) are retrieved and displayed. In addition, a corresponding moving image of the recording medium 90 from this start time is displayed at the same time.

The display patterns shown in the figures are illustrations, and they may be properly changed for easy observation.

Herein, in this example, retrieval is carried out in the retrieval screen first, however, in a case where the amount of data registered in the database 17 is small, it is also allowed that the retrieval process is omitted, and whole data is displayed on the thumbnail screen and selection of a target person is made.

Furthermore, the thumbnail images and shooting time are displayed together on the thumbnail screen, however, in addition to the shooting time, other person characteristics that can be registered into the database 17, for example, gender, age and the like may be displayed.

As shown in the figure, when a moving image is simultaneously displayed, incidental circumstances such as the number of persons and characters who entered at the same time with a target person can be grasped, and for example, it becomes easy to investigate accomplices.

## Claims

1. A surveillance recording device comprising:
cameras(1)(2) for shooting a target space;
an image recording and reproducing means(8) for recording images shot by the cameras(1)(2) into a recording medium(90), and reproducing images from this recording medium(90);
an essential image extracting means(13) for extracting essential images of a person from the images shot by the cameras(1)(2); and
a retrieval information recording means(17) for recording retrieval information including the essential images.

2. The surveillance recording device according to Claim 1, wherein the essential images include facial images of the person.

3. The surveillance recording device according to Claim 1, wherein the essential images include whole body images of the person.

4. The surveillance recording device according to Claim 1, further comprising a person characteristics detecting means(14) for detecting person characteristics based on the essential images extracted by the essential image extracting means(13), wherein the retrieval information includes the person characteristics.

5. The surveillance recording device according to Claim 4, wherein the person characteristics include the height of the person.

6. The surveillance recording device according to Claim 2, further comprising a best shot selecting means(15) for selecting a best shot among the person facial images, wherein
the retrieval information includes the best shot facial image.

7. The surveillance recording device according to Claim 2, further comprising a display means(7) and a display image generating means(8) for generating display images to be displayed by the display means(7), wherein the display image generating means(8) generates a thumbnail screen for displaying a list of essential images of people.

8. The surveillance recording device according to Claim 7, wherein the display image generating means(8) generates a detailed information screen relating to a specified thumbnail instructed on the thumbnail screen, and this detailed information screen includes essential images, characteristics, and shooting times of people.

9. The surveillance recording device according to Claim 1, wherein the image recording and reproducing means(8) records images only in sections in which the essential image extracting means(13) can extract essential images of people onto the recording medium(90).

10. A surveillance recording device comprising:
cameras(1)(2) for shooting a target space;
an image recording and reproducing means(8) for recording images shot by the cameras(1)(2) onto a recording medium(90) and reproducing images from this recording medium(90);
a detection wall setting means(11) for setting a detection wall(24) for detecting entry of people into a target space; and
a collision detecting means(12) for detecting whether or not a person has collided with the detection wall(24), wherein
the detection wall(24) is a virtual wall composed of a plurality of voxels(25) depending on the positional relationship of the cameras(1)(2), and the thickness of this detection wall(24) is set to be sufficiently small with respect to the depth of the target space.

11. The surveillance recording device according to Claim 10, wherein the essential image extracting means(13) extracts essential images of a person after the collision detecting means(12) detects collision of a person, and the retrieval information includes the time at which the collision detecting means(12) detects collision of the person.

12. The surveillance recording device according to Claim 10, wherein the image recording and reproducing means(8) starts recording images shot by the cameras(1)(2) after the collision detecting means(12) detects collision of a person.

13. A surveillance recording device comprising:
cameras(1)(2) for shooting a target space;
an image recording and reproducing means(8) for recording images shot by the cameras(1)(2) onto a recording medium(90) and reproducing images from this recording medium(90);
an essential image extracting means(13) for extracting essential images of an object from images shot by the cameras(1)(2); and
a retrieval information recording means(17) for recording retrieval information including the essential images.

14. A surveillance recording method in which a target space is shot by cameras(1)(2) and the shot images are recorded onto a recording medium(90), wherein
essential images of an object are extracted from the images shot by the cameras(1)(2), and retrieval information including these essential images is associated with the images shot by the cameras(1)(2) and recorded.

15. A surveillance recording method in which a target space is shot by cameras(1)(2) and the shot images are recorded onto a recording medium(90), wherein
essential images of a person are extracted from the images shot by the cameras(1)(2), and retrieval information including the essential images is associated with the images shot by the cameras(1)(2) and recorded.

16. The surveillance recording method according to Claim 15, wherein the essential images include facial images of the person.

17. The surveillance recording method according to Claim 15, wherein the essential images include whole body images of the person.

18. The surveillance recording method according to Claim 15, wherein person characteristics are detected based on essential images and the person characteristics are included in the retrieval information.

19. The surveillance recording method according to Claim 18, wherein the person characteristics include the height of the person.

20. The surveillance recording method according to Claim 16, wherein a best shot is selected among the facial images of the person and the best shot facial image is included in the retrieval information.

21. The surveillance recording method according to Claim 16, wherein a thumbnail screen for displaying a list of essential images of people is displayed.

22. The surveillance recording method according to Claim 21, wherein a detailed information screen including essential images of a person, person characteristics, and person shooting times that relate to a specified thumbnail instructed on the thumbnail screen is displayed.

23. The surveillance recording method according to Claim 15, wherein images are recorded onto a recording medium(90) only in sections in which essential images of people have been extracted.

24. A surveillance recording method in which a target space is at least stereoscopically shot by cameras(1)(2) and the shot images are recorded onto a recording medium(90), wherein
a virtual detection wall(24) is provided which is composed of a plurality of voxels(25) depending on the positional relationship of the cameras(1)(2) and has a thickness that is sufficiently small with reference to the depth of the target space; and
entry of a person into the target space is detected by detecting whether or not the person has collided with the detection wall(24).

25. The surveillance recording device according to Claim 24, wherein extraction of essential images of a person is started after detecting that the person has collided with the detection wall(24), and the time at which the person collides with the detection wall(24) is included in the retrieval information.

26. The surveillance recording method according to Claim 24, wherein recording of images shot by the cameras(1)(2) is started after detecting that a person has collided with the detection wall(24).
